Europäisches Patentamt

European Patent Office

Office européen des brevets

(19)

(11) Veröffentlichungsnummer: **0 104 160**
**B1**

(12) **EUROPÄISCHE PATENTSCHRIFT**

(45) Veröffentlichungstag der Patentschrift:
16.12.87

(51) Int. Cl.⁴: **C 12 C 3/00**

(21) Anmeldenummer: **83890164.3**

(22) Anmeldetag: **15.09.83**

(54) **Verfahren zur Herstellung von Presslingen aus Hopfen.**

(30) Priorität: **16.09.82 AT 3472/82**

(43) Veröffentlichungstag der Anmeldung:
**28.03.84 Patentblatt 84/13**

(45) Bekanntmachung des Hinweises auf die Patenterteilung:
**16.12.87 Patentblatt 87/51**

(84) Benannte Vertragsstaaten:
**BE CH DE FR GB IT LI LU NL SE**

(56) Entgegenhaltungen:
**DE-A-2 153 591**
**DE-A-2 214 062**
**DE-A-2 417 367**
**DE-A-2 833 589**
**FR-A-2 096 201**

(73) Patentinhaber: **ANSTALT FÜR FERMENTTECHNOLOGIE, Städtle 36, FL- Vaduz (LI)**

(72) Erfinder: **Kühtreiber, Franz, Dipl.- Ing. Dr. Techn., A-2136 Laa an der Thaya Niederösterreich (AT)**

(74) Vertreter: **Gibler, Ferdinand, Dipl.Ing.Dr.tech., Dorotheergasse 7/14, A-1010 Wien (AT)**

EP 0 104 160 B1

## Beschreibung

Die Erfindung betrifft ein Verfahren zur Herstellung von Preßlingen aus, gegebenenfalls zerkleinertem, Hopfen.

Hopfen zählt hinsichtlich der Geschmacksbildung zum wichtigsten Rohstoff bei der Bierherstellung.

Ein großer Nachteil des Hopfens ist jedoch seine geringe Alterungsbeständigkeit. Auch bei einer Lagerung im Temperaturbereich von 0°C tritt eine Qualitätsverschlechterung der für den Brauprozeß wichtigen Inhaltsstoffe und eine Beeinträchtigung deren wünschenswerten Eigenschaften ein.

Schon seit geraumer Zeit ist man bemüht, den Hopfen in eine verwertbare Form zu bringen, die eine länger andauernde Haltbarkeit und Lagerungsfähigkeit gewährleistet. Zunächst ergaben sich auf der Basis dieser Bemühungen die sogenannten Hopfenextrakte.

Eine Form, die erst innerhalb der letztvergangenen zehn Jahre Bedeutung erlangte, sind Hopfenpreßlinge, deren Verwendung den Vorteil erbringt, daß die Hopfengabe verfahrenstechnisch weitgehend automatisierbar und gut regelbar ist. Bei den üblichen Abmessungen solcher Preßlinge von ca. 4 bis 6 mm Durchmesser ist deren Herstellung kein Problem.

Wenn man Hopfen, aus solchem Hopfen hergestelltes Pulver und aus solchem Pulver hergestellte Preßlinge in Glaskolben mit kochend heißem Wasser übergießt, dann ist zwischen dem Rohhopfen und dem gemahlenen Hopfen kein geruchlicher Unterschied festzustellen, sehr wohl aber ist ein solcher Unterschied gegenüber dem zu Preßlingen verpreßten Hopfen feststellbar; bei feinen Bieren wirkt sich diese Verschlechterung einiger Hopfeninhaltsstoffe bis in das fertige Bier hin aus.

Daraus folgt, daß offenbar die chemischphysikalische Beanspruchung des Hopfens beim Verpressen Schuld an dieser abträglichen Qualitätsverschlechterung trägt.

Hopfenpreßlinge müssen nach ihrer Verpressung gekühlt werden, weil sie mit Temperaturen von 70 bis 80°C aus der Presse austreten. In verschiedenen Veröffentlichungen wurde die Ansicht vertreten, daß diese Temperaturerhöhung durch die Reibung des gepreßten Hopfens in den Bohrungen der Preßmatrize hervorgerufen werde.

Was aber bisher beim Hopfenverpressen ganz offensichtlich übersehen wurde, ist, daß man mit dem Hopfenpulver auch die darin eingeschlossene Luft mitverpreßt hat.

An Hand einer Anlage, die zum Verpressen von Hopfen eingesetzt wird, kann man folgende Überlegungen anstellen:

Die verwendete Ringmatrize hat 2520 Bohrungen von je 5,5 mm Durchmesser, was einer Querschnittsfläche von 23,7 mm² pro Bohrung entspricht. Die gesamte freie Durchtrittsfläche der Matrize beträgt somit 5,97 dm².

Die Dichte der pflanzlichen Substanz des Hopfens beträgt 1,5 g/cm³, die Dichte der Hopfenpreßlinge kann man mit etwa 1,4 g/cm³ ansetzen.

Bei einer stündlichen Pressenleistung von 1000 kg Preßlingen ergibt dies dann ein Preßlingsvolumen von 714 dm³. Dieses Volumen geteilt durch die Querschnittsfläche ergibt ein stündliches Preßlingswachstum von 12,0 m, entsprechend 3,34 mm/s. Anders ausgedrückt: Jedes Hopfenteilchen benötigt 13,5 s zum Passieren der 45 mm langen Matrizenbohrung.

Ausgehend von der Dichte der Hopfenpreßlinge mit 1,4 g/cm³ enthalten diese somit neben der Hopfensubstanz 6,7 % luftgefüllte Hohlräume.

1 dm³ Hopfenpreßlings-Masse enthält also 1,40 kg Hopfensubstanz (0,933 dm³) und 67 ml Luft.

Normales Hopfenpulver hat ein Schüttgewicht von 0,13 kg/dm³, d.h. einen Luftgehalt von rund 91%. Ein meßtechnisch nicht erfaßbarer Anteil davon wird mitkomprimiert und diffundiert, nachdem der Preßling die Matrizenbohrung verlassen hat, während des Aufenthaltes auf der Kühlstrecke aus dem Preßling wegen des großen Druckunterschiedes naturgemäß heraus in die Atmosphäre, aber während des Preßvorganges, mit dem zwangsläufig auch die adiabatische Kompression des Luftanteiles erfolgt, beträgt die dabei erreichte Temperatur:

$$T_2 = T_1 \left( \frac{P_2}{P_1} \right)^{\frac{\varkappa - 1}{\varkappa}}$$

H für Luft = 1,4
$T_1$ Raumtemperatur (20°C) in K
$T_2$ Endtemperatur in K
$P_1$ Luftdruck (1 bar)
$P_2$ Preßdruck (1000 bar)
$T_2 = 293 \left(\frac{1000}{1}\right)^{\frac{1,4-1}{1,4}} = 293 . 1000^{0,286} = 2112$ K, entspricht 1840°C,

und in Abhängigkeit von der Menge der mitkomprimierten Luft trägt diese - neben der Reibungswärme zur Erwärmung der Preßlinge auf die eingangs erwähnte Temperatur mit bei.

Man muß sich nun vorstellen, daß bei dieser Temperatur ein Sauerstoff-Partialdruck von mindestens 200 bar mindestens 13 s lang wirkt. Dabei sind Reaktionen, die eine qualitativ höchst abträgliche Veränderung der brauwichtigen Hopfeninhaltsstoffe zur Folge haben, unvermeidlich.

In der deutschen Patentschrift 1 070 121 ist bereits ein Verfahren beschrieben, demzufolge der Hopfen vorgepreßt und mit einer gasdurchlässigen Umhüllung versehen in einen gasdichten Behälter eingebracht wird. In diesem Behälter wird dann der Hopfen einem starken Unterdruck ausgesetzt und schließlich wird dem Behälter ein inertes Gas unter Druck zugeführt, um das Aroma des Hopfens auf diese Weise zu bewahren.

Auch dieses vorbekannte Verfahren krankt allerdings daran, daß bei der Herstellung der Preßlinge zwangsläufig atmosphärische Luft mitverpreßt wird und die in den Preßlingen solcherart enthaltene komprimierte Luft das Zustandekommen zuverlässig formbeständiger Preßlinge verhindert und weiters die oben geschilderte Schädigung durch hohe Temperaturen hervorruft. Werden derart hergestellte Preßlinge anschließend einem Unterdruck ausgesetzt, würden sie unweigerlich durch den Überdruck der darin enthaltenen komprimierten Luft zerstört werden. Man mußte deshalb bei diesem vorbekannten Verfahren die Formkörper mit einer gasdurchlässigen Umhüllung versehen und mit Hilfe straffgezogener Bänder oder Drähte verschnüren.

Der Luftanteil in solchen Ballen ist naturgemäß außerordentlich hoch; bei einem üblichen zylindrischen Ballen mit den Abmessungen 0,62 m Durchmesser und 1,1 m Höhe, bestehend aus 100 kg verpreßten Hopfendolden ergibt sich ein Verhältnis der reinen Hopfenmasse zur mitverpreßten Luft von etwa 1: 4. Infolge der Druckbelastung bei der Herstellung dieser Preßlinge (Ballen) von etwa 60 bar entsteht durch die Kompression dieser sauerstoffhaltigen Luft bei einer kurzfristig eintretenden Erwärmung auf etwa 630°C eine erhebliche Beschleunigung der den Hopfenaromastoffen abträglichen Reaktion des Sauerstoffes mit den Hopfeninhaltsstoffen.

Die Erfindung beruht demnach auf der Erkenntnis, daß die Ursache all dieser Nachteile darin zu finden ist, daß bei der Herstellung der Preßlinge atmosphärische Luft mitverpreßt wird und in den Preßlingen verbleibt, so daß diese Preßlinge mit der darin enthaltenen sauerstoffhaltigen Luft der Weiterbehandlung zugeführt werden, die üblicherweise erst viele Wochen nach der Verpressung in den verarbeitenden Brauereien erfolgt.

Erfindungsgemäß ist deshalb vorgesehen, daß die sauerstoffhaltige Luft vor und/oder während des Verpressens aus dem Hopfen zumindest teilweise entfernt und bedarfsweise durch Zufuhr des hopfeninerten Gases bei einem zwecks Erzielung unterschiedlicher Festigkeiten der Preßlinge wählbaren Unterdruck bis zu 1 bar ersetzt wird.

Während also beim vorbekannten Verfahren die Luft und der darin enthaltene Sauerstoff zunächst mit dem Hopfen mitverpreßt wurden und man lediglich versucht hat, den dadurch bedingten Schaden hinsichtlich einer Verschlechterung der Aromastoffe zu verringern, kommt es bei dem erfindungsgemäßen Verfahren von vornherein zu keiner schädlichen Wirkung der sauerstoffhaltigen Luft, weil diese Luft schon vor und/oder während des Verpressens zumindest teilweise aus dem Hopfen entfernt wird. Dadurch werden die bei der adiabatischen Kompression der mitverpreßten Luft unvermeidlichen, die Aromastoffe schädigenden Temperaturerhöhungen vermieden.

Wesentlich ist demnach gemäß dem Erfindungsgedanken, daß einerseits der Hopfen, gegebenenfalls zerkleinert, schon vor der endgültigen Verpressung zumindest teilweise evakuiert und dadurch von der sauerstoffhaltigen Luft zumindest weitgehend befreit wird, andererseits aber - darüber hinausgehend - auch dafür gesorgt wird, daß vor dem eigentlichen Verpressen nicht wiederum sauerstoffhaltige Luft, sondern - gegebenenfalls - nur ein inertes Gas in den Hopfen gelangt und solcherart die vorher darin enthaltene Luft ersetzt.

Bei diesem erfindungsgemäßen Verfahren kann vorteilhafterweise die Festigkeit der Preßlinge willkürlich beeinflußt und variiert werden, indem man die Höhe des Druckes des zugeführten inerten Gases zwischen 0 und 1 bar regelt.

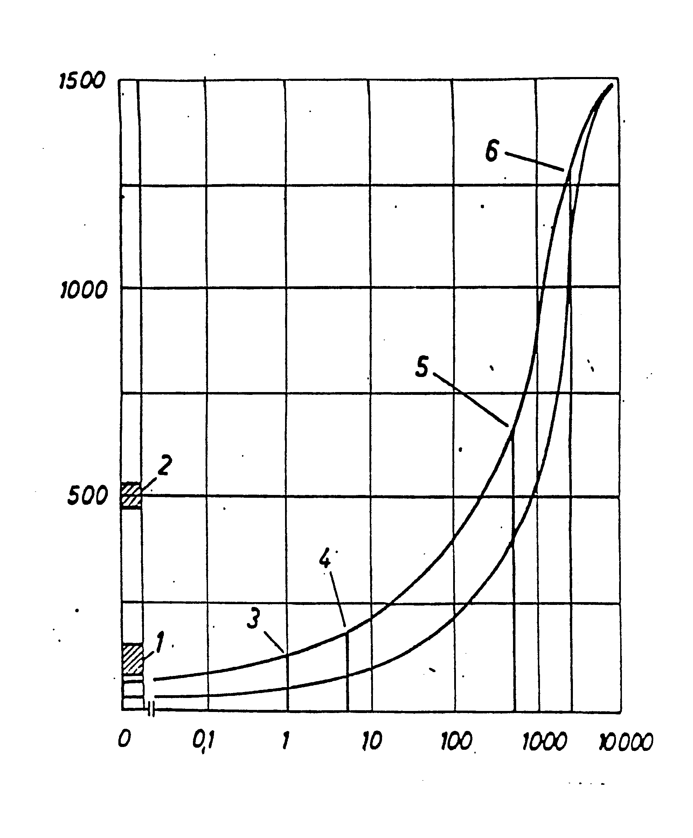

Für die bei der Herstellung verschieden dichter Preßlinge anzuwendenden Preßdrücke gibt die einzige Zeichnungsfigur beispielsweise Anregungen. In dieser Zeichnungsfigur sind die Preßdrücke in bar in der Abszisse eines Diagrammes, die Dichte in $kg/m^3$ in dessen Ordinate aufgetragen. In der Ordinate bezeichnet der Bereich 1 gehäckseltes, der Bereich 2 gemahlenes Hopfenmaterial. Der Kurvenbereich 3 entspricht der Verdichtung durch eine Niederdruckpresse, der Bereich 4 der Verdichtung durch eine Hochdruckpresse, der Bereich 5 dem Brikettieren und der Bereich 6 dem Verdichten zu Preßlingen der oben erläuterten Konsistenz.

**Beispiel 1:**

100 kg Hopfen wurden auf - 20°C gekühlt, wodurch sich eine hohe Sprödigkeit der Hopfendolden ergab. In diesem Zustand konnten die Hopfendolden einer Hammermühle zugeführt werden und wurden auf eine bestimmte Korngröße zerkleinert. Der so gekörnte Hopfen ist nun lagerfähig und wurde beliebig gekühlt oder auch schon auf Umgebungstemperatur erwärmt der Presse zugeführt.

Die Verpressung wurde mittels einer Ringmatrizenpresse durchgeführt, die sich innerhalb eines evakuierten Behälters befand. Dem evakuierten Raum dieses Behälters wurde der zerkleinerte Hopfen über eine Schleuse zugeführt und über eine weitere Schleuse wurde der zu Preßlingen verarbeitete Hopfen entnommen.

Bei Vergleichsversuchen stellte sich heraus, daß Hopfenpreßlinge, die unter atmosphärischem Druck hergestellt wurden, eine Temperatur von 72°C beim Verlassen der Presse aufwiesen und eine durch die aufgetretene Oxydation hervorgerufene Vergilbung zeigten. Außerdem war das Aroma sehr verschlechtert, wogegen die bei 40 mbar absolut gepreßten Preßlinge eine frischgrüne Farbe und gutes Hopfenaroma aufwiesen.

Gleichwohl nur ein Unterdruck von 40 mbar absolut erreicht wurde, betrug die Temperatur der Preßlinge nach dem erfindungsgemäßen Verfahren lediglich 52°C, was zum überwiegenden Teil auf die Reibung in der Matrizenpresse zurückzuführen ist. Diese Temperaturdifferenz von 20°C erlaubt es, das mitgepreßte Luftvolumen zu berechnen und es ergab sich dabei eine Belastung des Hopfens pro kg mit 6 g Sauerstoff, was in der Brauindustrie, wo mit mg Sauerstoff pro 1 gerechnet wird, erschreckend ist.

### Beispiel 2:

Nachdem in der Brauindustrie nicht nur zerkleinerter, zu Preßlingen verarbeiteter Hopfen verwendet wird, sondern viele Brauereien noch immer Doldenhopfen verwenden, wurden auch in dieser Richtung Versuche angestellt.

Einer Preßform von 300 x 300 mm Querschnitt wurden 5 kg Doldenhopfen zugeführt. Nach Einführung des Preßstempels wurde durch Absaugen entlüftet, eventuell zusätzlich durch Abpressen, was - gegebenenfalls - auch im Zuge des Preßverfahrens durchgeführt werden kann, so daß die Evakuierung demnach bis zur Erreichung der endgültigen Preßdichte aufrechterhalten bzw. erreicht werden kann.

In beiden Beispielen wäre es möglich gewesen, die Festigkeit der Preßlinge durch Zusatz eines inerten Gases im Bereich von 0 bis 1 bar absolut nach Wunsch einzustellen.

### Patentansprüche

Verfahren zur Herstellung von Preßlingen aus gegebenenfalls zerkleinertem Hopfen, wobei dieser Hopfen zwecks Erhaltung der brautechnisch wertvollen Inhaltsstoffe entlüftet und allenfalls unter Zusatz hopfeninerter Gase, wie Stickstoff oder Kohlendioxyd, weiterbehandelt wird, dadurch gekennzeichnet, daß die sauerstoffhaltige Luft vor- und/oder während des Verpressens zumindest teilweise aus dem Hopfen entfernt und bedarfsweise durch Zufuhr des hopfeninerten Gases bei einem zwecks Erzielung unterschiedlicher Festigkeiten der Preßlinge wählbaren Unterdruck bis zu 1 bar ersetzt wird.

### Claims

Process for the preparation of pellets from hops which may have been comminuted, these hops being deaerated and, if necessary, being further treated with gases inert towards hops, such as nitrogen or carbon dioxide, in order to preserve the constituents valuable in brewing technology, characterized in that the oxygen-containing air is at least partially removed from the hops before and/or during pressing and, if required, is replaced by adding the gas, which is inert towards hops, under a reduced pressure of up to 1 bar, which can be selected in order to obtain different consistencies of the pellets.

### Revendications

Procédé pour la fabrication de granules à partir de houblon éventuellement écrasé dans lequel le houblon est dégazé pour maintenir la substance de valeur en technique de brasserie, et est traité au besoin avec un gaz de remplacement inerte au houblon, tel que l'azote ou dioxyde de carbone, caractérisé en ce que l'air contenant de l'oxygène est retiré du houblon au moins partiellement avant et/ou pendant le pressage et qu'il est remplacé selon les besoins par une amenée de gaz inerte au houblon à une dépression choisie jusqu'à 1 bar selon les différentes duretés du granulé à réaliser.